Europäisches Patentamt

European Patent Office

Office européen des brevets

(19)

(11) Publication number: **0 117 246**
**A2**

(12) # EUROPEAN PATENT APPLICATION

(21) Application number: **84850055.9**

(22) Date of filing: **16.02.84**

(51) Int. Cl.³: **H 01 G 9/20**
**C 25 B 1/04**

(30) Priority: **18.02.83 US 467501**

(43) Date of publication of application:
**29.08.84 Bulletin 84/35**

(84) Designated Contracting States:
**AT BE CH DE FR GB IT LI LU NL SE**

(71) Applicant: **ENERGY CONVERSION DEVICES, INC.**
**1675 West Maple Road**
**Troy Michigan 48084(US)**

(72) Inventor: **Reichman, Benjamin**
**2510 Windemere**
**Birmingham, MI 48008(US)**

(72) Inventor: **Sapru, Krishna**
**1924 Smallbrook Court**
**Troy, MI 48098(US)**

(72) Inventor: **Liang, Gao**
**16600 Burgess Avenue**
**Detroit, MI 48219(US)**

(72) Inventor: **Pinsky, Naum**
**22111 Erwin Street Apt. R-223**
**Woodland Hills, CA 91367(US)**

(74) Representative: **Berglund, Gustav Arthur et al,**
**AWAPATENT AB Box 5117**
**S-200 71 Malmö(SE)**

(54) **Liquid junction photoelectrodes using amorphous silicon-based thin film semiconductor.**

(57) An amorphous silicon semiconductor alloy (32 and 34) having multiple layers (38 and 58) (42 and 60) is used to form a photoelectrode (either a photoanode (14) or a photocathode (16) for use in a photoelectrochemical cell (10) for the photoelectrolysis of water to produce hydrogen or the conversion of solar energy into electrical energy. Each layer of the semiconductor alloy has a different dopant concentration ranging from no dopant to a heavy dopant concentration. The semi-conductor alloy of the photoelectrode is a -Si:F:H or a-Si:H$_x$ deposited on a reflective layer (28 and 30) of aluminum of molybdenum which is deposited on a substrate (24 and 28) of glass or stainless steel. A tunnelable oxide layer (62) can be deposited or intrinsically formed to cover and protect the top surface (60) of the semiconductor alloy body. The photoanode is of an n-type configuration while the photocathodes can be either a p-type or a P-I-N type configuration.

FIG. 1

LIQUID JUNCTION PHOTOELECTRODES USING AMORPHOUS
SILICON-BASED THIN FILM SEMICONDUCTOR

This invention relates to liquid junction photoelectrochemical cells and in particular to photoelectrode structures for liquid junction photovoltaic cells.

Numerous types of devices which convert solar energy into electrical energy are known. One class of device which is of particular interest is the liquid-junction photovoltaic cell which provides an attractive structure not only to convert solar energy into electrical energy, but also to decompose water to obtain hydrogen. Considerable interest in hydrogen production via the solar decomposition of water exists because water is an exceedingly abundant and inexpensive source of raw materials and hydrogen is an easily storable nonpolluting fuel which can be used for transportation, heating and the generation of electricity. Indeed, the generation and storage of hydrogen is an attractive energy alternative to the direct storage of electricity using batteries.

The generation of hydrogen in a liquid junction photovoltaic cell requires at least one photoelectrode in an electrolyte. The electrolyte may be either acidic or alkaline. When the electrolyte is acidic, the reaction at the cathode is:

(a)  $2H^+ + 2e^- \rightarrow H_2$.

This reaction proceeds in the dark as sufficient electrons are availabale. At the anode, the reaction is:

(b)  $H_2O + 2H^+ \rightarrow 2H^+ + 1/2\ O_2$.

When the electrolyte is alkaline, the reaction at the cathode is:

(c)   $H_2O + e^- \rightarrow 1/2\ H_2 + OH^-$

and the reaction at the anode is:

(d)   $2OH^- + 2H^+ \rightarrow H_2O + 1/2\ O_2$.

An electrolytic cell utilized for electrolysis can utilize a photocathode and a conventional metal anode, a photoanode and a conventional metal cathode, or a photoanode and photocathode.

In addition to utilization of an acidic or alkaline electrolyte for the direct production of hydrogen, a redox couple can also be used for the electrolyte. The redox couple is utilized for the direct production of electricity instead of producing hydrogen and the couple is selected to have a chemical potential within the band gap of the photoelectrode. A detailed discussion of the operation of cells utilizing a liquid junction photoanode, a photocathode, or both to convert solar energy into electrical energy is contained in the article entitled "Conversion of Sunlight into Electrical Power and Photoassisted Electrolysis of Water in Photoelectrochemical Cells" by Adam Heller in Accounts of Chemical Research, Volume 14, published in 1981.

For optimum efficiency the semiconductor utilized for the photoelectrode should have a band gap in the approximate range of 1.5 to 1.7 eV with a Fermi level which is compatible with the electrolytic solution. For an n-type semiconductor, the water electrolysis process proceeds best when the semiconductor has a band gap slightly greater than 1.5 electron volts with a work function sufficiently small that electrons diffuse into the water to attain thermal equilibrium thus causing the energy bands of the semiconductor to bend up near the interface of the electrolyte. The incident sunlight is then absorbed in the semiconductor creating electron-hole pairs and the photo-excited holes are accelerated towards the semiconductor-electrolyte interface by the internal field. When holes are injected into the water at the correct energy, oxygen is evolved near the anode and hydrogen is evolved near the cathode according to the reactions described in equations a and b, or c and d, above depending upon whether an acidic or alkaline system is utilized.

A major problem with prior attempts to develop photoelectrodes has been the inability to provide semiconductor materials which possess the capability of providing efficient solar conversion efficiencies while at the same time having the ability to maintain stability during operation. For example, the crystalline silicon semiconductor materials proposed for photoelectrode use have a band gap of about 1.1 eV, which is within the range for providing optimum sunlight absorption, but these materials decompose very rapidly during utilization. Other crystalline semiconductor materials, such as $TiO_2$, $WO_3$ and $SrTiO_3$ have been found to exhibit more acceptable stability for photoelectrode applications than the crystalline silicon semiconductor materials. These materials, however, generally have larger band gaps which are responsive only to a ultraviolet light spectrum. Since only a small fraction of the sunlight reach-

-4-

ing the earth is in the ultraviolet light spectrum the conversion efficiency of these materials is severely limited making their use unacceptable. Cadmium sulfide (CdS) and gallium arsenide (GaAs) crystalline materials have proper band gaps of about 1.5 to 2.0 eV, but are not stable under photoelectrolysis conditions.

In accordance with the present invention, the photoelectrodes are fabricated utilizing one or more amorphous silicon based thin film semiconductor alloys. Amorphous silicon based semiconductor alloys are particularly useful because of the ability to independently control the work function, Fermi level and energy gap of such amorphous alloy semiconductors. Furthermore, amorphous silicon based semiconductor alloys can be formed to be less corrosive than crystalline materials while providing an electrode which efficiently converts solar energy into chemical energy by the photoelectrolysis of water. Specific amorphous alloy materials and the method of making them, which can be utilized as the photoelectrodes are disclosed in U.S. Patent Nos. 4,217,374; 4,226,898 and 4,342,044 assigned to the assignee of record in this application, which are incorporated herein by reference.

The present invention provides a photoelectrode for a liquid junction photovoltaic device which includes a substrate having a deposition surface, a reflective layer deposited on the substrate surface, and a thin film amorphous silicon semiconductor alloy body deposited on the reflective layer. The alloy body includes a first and second layer. The first layer is adjacent the reflective layer, includes a first dopant, and couples to an electrically conductive lead of the device. The invention also provides a photoelectrochemical cell for the conversion of sunlight into electrical energy or energy stored in a fuel. The cell includes an interior space divided by a membrane to form an anode compartment and a cathode compartment. Both compartments contain an electrode with at least a portion of each electrode in contact with an electrolyte. At least one of the electrodes is a photoelectrode of the type described herein. The cell also includes means for impinging photons upon the photoelectrode for the conversion of sunlight into energy usable as electricity or a fuel.

In one embodiment the semiconductor portion can include a first p+ amorphous silicon alloy contact layer which is coupled to the electrical lead and is doped, for example with boron, to a concentration of about $10^{23}$ atoms/$cm^3$. A second amorphous silicon alloy layer is deposited on the first layer which is doped, for example with boron to a concentration of about $10^{17}$ atoms/$cm^3$ to provide a photocathode. In accordance with the photocathode embodiment of the invention, the first layer has a thickness in the range of about 600 angstroms to about 1500 angstroms and the second layer has a thickness in the range of about 5000 angstroms to 6000 angstroms. The reflective layer is preferably either aluminum or molybdenum and has a thickness in the range of about 2000 angstroms.

In another embodiment of the invention the photoelectrode can be a photoanode where the semiconductor body includes a first n+ type amorphous silicon alloy contact layer which is doped, for example by phosphorus to a concentration of about $10^{27}$ atoms/$cm^3$ and has a thickness in the range of 600 angstroms to 1500 angstroms. The first layer is formed adjacent to the reflective layer and is coupled to an electrical lead. The second layer is not specifically doped, but can include n-type characteristics and preferably has a thickness in the range of about 5000 to 6000 angstroms.

The photoanode can include a tunnelable thin film oxide layer deposited to cover the semiconductor alloy to protect it from the electrolyte of the liquid junction photovoltaic device. The oxide layer can be an intrinsically formed oxide of the silicon alloy semiconductor material which is formed to a tunnelable thickness. In general, that thickness will be in the range of about 10 angstroms to 40 angstroms.

In another embodiment, the semiconductor body can include a first layer of amorphous silicon alloy which is a p+ type layer doped to a concentration of $10^{23}$ atoms/$cm^3$ coupled to an electrical lead; a second layer of substantially intrinsic (slightly n-doped) amorphous silicon semiconductor alloy; and a third n+ type layer of amorphous silicon semiconductor alloy doped to a concentration of about $10^{27}$ atoms/$cm^3$. Preferably, the first layer has a thickness in the range of 200 angstroms to 1500 angstroms, the second layer has a thickness in the range of 5000 angstroms to 6000 angstroms and the third layer has a thickness in the range of about 600 angstroms to about 1500 angstroms.

Accordingly, a first object of the invention is to provide a photoelectrode having an electrically conductive lead for being immersed in electrolyte in a liquid junction photoelectrochemical device, a substrate including a deposition surface, and a reflective layer deposited on the deposition surface of the substrate. The photoelectrode is characterized by a thin film amorphous silicon semiconductor alloy body deposited on the reflective layer having at least a first and a second layer. The first layer is adjacent the reflective layer and includes a first dopant. The first layer adapts to be coupled to the electrically conductive lead of the photoelectrochemical device.

A second object of the invention is to provide a photoelectrochemical cell for the conversion of sunlight into electrical energy or energy stored in a fuel. The cell has an interior space therein. The space is divided by a membrane positioned in the space to form an anode compartment and a cathode compartment within the cell. The cell includes an electrolyte in the anode compartment and in the cathode compartment, an electrode positioned in the cathode compartment with at least a portion in contact with the electrolyte, an electrode positioned in the anode compartment with at least a portion in contact with the electrolyte, and means for impinging photons upon the photoelectrode wherein sunlight will be converted into energy usable as electricity or a fuel. At least one of the electrodes is a photoelectrode. The photoelectrode includes a substrate having a deposition surface, a reflective layer deposited on the deposition surface of the substrate, and an electrically conductive lead. The photoelectrode is characterized by a thin film amorphous silicon semiconductor alloy body deposited on the reflective layer having at least a first and a second layer. The first layer is adjacent the reflective layer and includes a first dopant. The first layer is adapted to be coupled to the electrically conductive lead.

The preferred embodiment of this invention will now be described by way of example, with reference to the drawings accompanying this specification in which:

Fig. 1 is a schematic representation of a liquid junction photoelectrochemical cell which incorporates both a photoanode and a photocathode in accordance with the invention;

Fig. 2 is a section of a p-type photocathode in accordance with the invention;

Fig. 3 is a section of a PIN type photocathode in accordance with the invention; and

Fig. 4 is a section of an n-type photoanode in accordance with the invention.

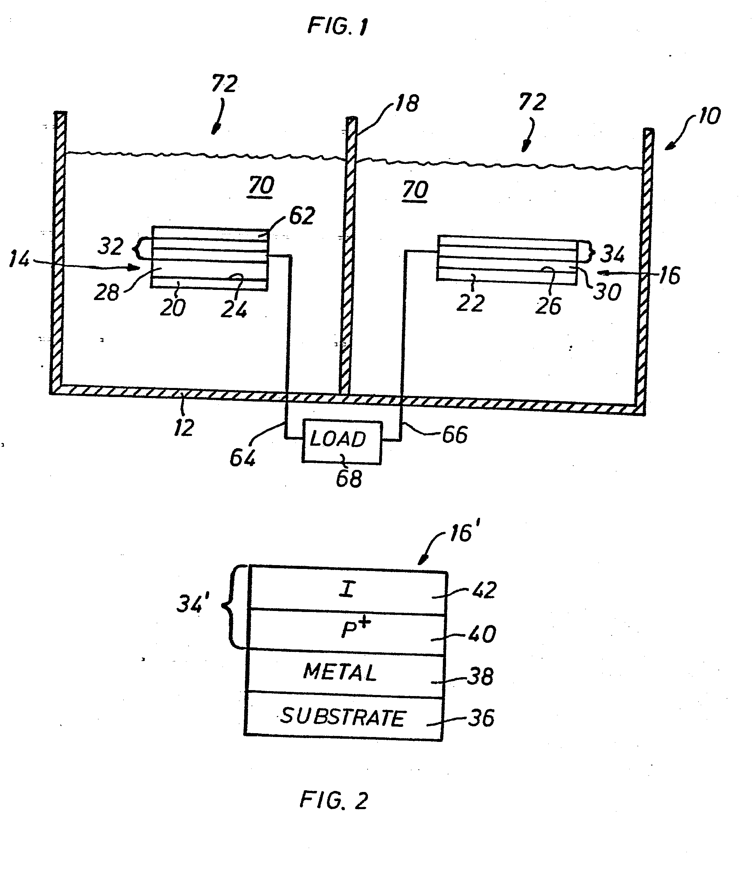

Referring to Fig. 1, a liquid junction photoelectrochemical cell 10 for the photoelectrolysis of water is illustrated. The cell 10 includes a container 12 with two photoelectrodes 14 and 16 immersed in an electrolyte. The photoelectrodes are separated by a membrane 18 and a photoanode 14 and a photocathode 16. The photoelectrodes each have a substrate 20 and 22 with a deposition surface 24 and 26. The substrates 20 and 22 can be stainless steel, glass or any other material which provides a relatively rigid support.

Conventional deposition techniques such as sputter deposition or evaporated deposition can be utilized to deposit a thin reflective layer 28 and 30 on the substrate deposition surfaces 24 and 26. The reflective layers 28 and 30 preferably can be formed from molybdenum, aluminum or any other suitable conductive material which has a thickness sufficient to ensure that it is not transparent. A non-transparent first electrode of molybdenum results when the molybdenum has a thickness greater than about 300 angstroms. In the preferred embodiment, the reflective layers 28 and 30 will have a thickness in the range of about 2000 angstroms.

Next, a multilayer amorphous silicon semiconductor alloy body 32 and 34 is deposited on the reflective layers 28 and 30. The amorphous silicon semiconductor alloy bodies 32 and 34 preferably are either a-Si:F:H or a-Si:H$_x$ alloys. The alloys can be deposited by plasma or glow discharge techniques described in the above referred patents.

Specific embodiments of multilayer amorphous silicon alloy photoelectrodes are illustrated in Figs. 2, 3 and 4. Referring initially to Fig. 2, a p+ type photocathode 16' is illustrated which includes a stainless steel or glass substrate 36 on which is deposited a reflective layer 38, preferably of aluminum approximately 2000 angstroms thick. The multilayer amorphous silicon alloy body 34' is formed by first forming or otherwise depositing a p+ type layer 40 of a-Si:F:H or a-Si:$H_x$ material doped with boron to a concentration of about $10^{23}$ atoms/cm$^3$ on the reflective layer 38. The p+ type layer 40 is a contact layer to which an electrical lead can be attached and has a preferred thickness in the range of about 600 angstroms to 1500 angstroms. Finally, a top layer 42 of substantially intrinsic (I) a-Si:$H_x$ or a-Si:F:H can be deposited to a thickness of about 5000 angstroms to 6000 angstroms. The top layer is very slightly doped p-type, such as with boron. The photocathode 16' can be formed with or without the top layer 42.

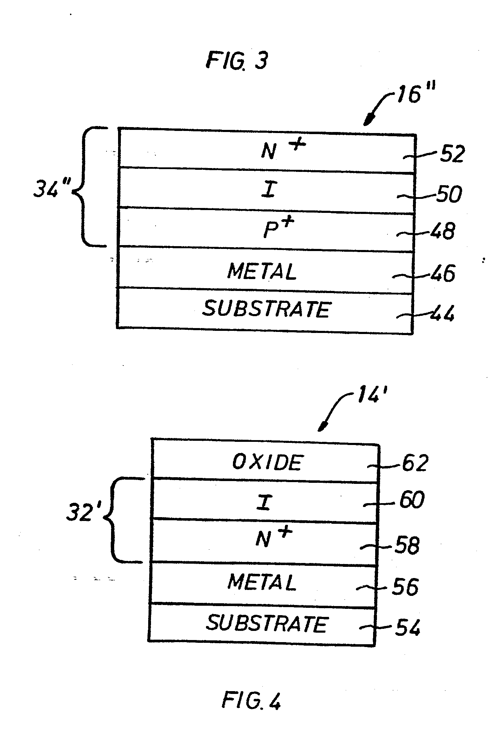

Referring to Fig. 3, a PIN type photocathode 16" is formed in accordance with the invention with a glass or stainless steel substrate 44, a molybdenum reflective layer 46 deposited on the substrate 44 to a thickness of about 2000 angstroms, a multilayer amorphous silicon semiconductor alloy body 34" deposited on the reflective layer 46. The multilayer amorphous silicon semiconductor alloy 34" is formed by first forming a p+ type a-Si:F:H or a-Si:$H_x$ conductive layer 48 doped with boron to a concentration of about $10^{23}$ atoms/cm$^3$. The first layer 48 is preferably in the range of about 200 angstroms to 1500 angstroms thick. A layer 50 of substantially intrinsic (I) (slightly n-doped) a-Si:F:H or a-Si:$H_x$ semiconductor alloy of approximately 5000 to 6000 angstroms thick is formed on the layer 48. Finally, a top layer 82 is formed of an n+ type a-Si:F:H or a-Si:H$_x$ semiconductor alloy doped with phosphorus to a concentration of about $10^{27}$ atoms/cm$^3$.

Referring to Fig. 4, an n-type photoanode 141 has a substrate 54 which·is made from glass, stainless steel of other similar material and a reflecting molybdenum layer 56 is formed thereon which is approximately 200 angstroms thick. An amorphous silicon alloy multilayer body 32' is formed by depositing an n+ type a-Si:F:H or a-Si:H$_x$ semiconductor layer 58 doped with phosphorus to a concentration of about $10^{27}$ atoms/cm$^3$. The thickness of the first layer 58 is approximately 600 angstroms to 1500 angstroms. Next, a layer 60 of substantially intrinsic (I) (slightly n-doped) a-Si:F:H or a-Si:H$_x$ semiconductor in the range of about 5000 angstroms to 6000 angstroms thick is deposited. Finally, a top oxide layer 62 is deposited or otherwise formed over the exposed surface of the intrinsic semiconductor layer 60 to primarily increase the conversion efficiency.

The oxide layer 60 has a tunnelable thickness so that current will pass through the oxide layer 60 even though in bulk form the oxide layer can be an insulator. In order to assure the existence of the tunnel effect, the oxide layer 60 preferably is between about 10 angstroms and 40 angstroms in thickness depending upon the type of semiconductor material on which the oxide layer is deposited. The oxide layer can be either a native dielectric which, for example, is grown by oxidizing the surface of the intrinsic semiconductor layer 60 or can be a separately deposited dielectric. In the latter case, the oxide layer can be any of a number of different oxides including $Nb_2O_5$, $Sb_2O_3$, $SiO_2$, $TiO_2$, $Ta_2O_5$ or any other suitable material which will operate to increase the conversion efficiency. Details of the construction and operation of one oxide layer 62 are described in pending patent application Serial No. 353,767, entitled "Liquid Junction Photovoltaic Device With Tunnelable Interfacial Layer", filed March 1, 1982, which application is herein incorporated by reference.

In accordance with the invention, photoassisted electrolysis can occur utilizing both a photocathode such as the photocathodes 16' and 16" described in conjunction with Figs. 2 or 3 and a photoanode such as the photoanode 14' described in connection with Fig. 4. Alternatively, only one photoelectrode along with a conventional metal counterelectrode can be utilized.

Returning to Fig. 1, the photoelectrochemical device 10 illustrated has a photoanode 14 and a photocathode 16 constructed in the manner described in conjunction with Figs. 4 and 2. A pair of suitable electrically conductive leads 64 and 66 are attached between the contact layers 58 and 40 and a load 68. A suitable electrolyte 70 is then placed in the container 12 to cover the photoelectrodes 14 and 16 so that when photons 72 impinge upon the electrodes, photoelectrolysis will occur according to the above described reactions.

Photoelectrodes have been utilized in photoelectrolysis as described in Example 1 and for the

-13-

conversion of sunlight into electrical energy as described in Examples 2 through 4 hereafter.  In photoelectrolysis, the operation can be assisted by replacing the load 68 with a source of electrical power.

EXAMPLE 1

An a-Si:H$_x$ (boron doped) ss/p+/p photocathode of the structure described in Fig. 2 was tested in a 1.0M KC1 electrolyte.  The photocathode has a Voc vs. a SCE reference electrode of -.64V, a current of .34 mA/cm$^2$ at a -1.20 volts at a light intensity of 45 mW/cm$^2$.  Hydrogen gas evolved from the electrode upon illumination of the electrode. A PIN type photocathode of the type described in Fig. 3 was tested under the same conditions and had a -.30 Voc, and 1.6mA/cm$^2$ current at -1.20 volts.

EXAMPLE 2

An n-type photoanode of the type described in Fig. 4 was tested in a half cell with an electrolyte of a 1M tetramethylammonium salt/ethenol containing ferrocenium ion redox couple.  Conversion efficiencies of 2.4%, 1.1% and .45% were obtained at illuminations of 10mW/cm$^2$, 45mW/cm$^2$ and 100mW/cm$^2$ respectively.

EXAMPLE 3

A PIN-type photocathode of the type described in Fig. 3 was also tested for conversion of solar

-14-

to electrical energy. The half cell electrolyte was a 30% aqueous acetonitrite containing .1 M KI 25mM methyviologen. Versus a SCE reference electrode, the Voc was .7V, and the Isc was 1.4 mA/cm$^2$. Conversion efficiency was .22%.

EXAMPLE 4

A p-type photocathode of the type described in fig. 2 was tested in the same cell as the PIN device. The p-type photocathode obtained efficiency of .05%, a Voc of .14V, and Isc of 1.1mA/cm$^2$.

Modifications and variations of the present invention are possible in light of the above teachings. For example, either or both of the photoelectrodes 14 and 16 can include a photocorrosion stabilization layer to further enhance the stability of the electrode. The stabilization layer can be a thin layer of platinum, iridium or similar type metal silicide as has been described with crystalline electrodes by Fan et al, Semiconductor Electrodes, Journal of the Electrochemical Society, Vol. 129, No. 7, July, 1982. It is therefore, to be understood that within the scope of the appended claims, the invention can be practiced otherwise than as specifically described.

1. A photoelectrode having an electrically conductive lead for being immersed in an electrolyte in a liquid junction photoelectrochemical device, a substrate including a deposition surface, and a reflective layer deposited on the deposition surface of the substrate, the photoelectrode characterized by:

a thin film amorphous silicon semiconductor alloy body (32 and 34) deposited on the reflective layer (28 and 30) having at least a first (40 and 58) and a second layer (42 and 60), the first layer being adjacent the reflective layer and including a first dopant and adapted to be coupled to the electrically conductive lead (64 and 66) of the photoelectrochemical device (10).

2. The photoelectrode according to claim 1 further characterized by the second layer being substantially intrinsic.

3. The photoelectrode according to claim 1 further characterized by the first layer being a first p+ amorphous silicon contact alloy layer doped to a concentration of about $10^{23}$ atoms/cm$^3$.

4. The photoelectrode according claim 1 further characterized by the dopant being boron.

5. The photoelectrode according to claim 1 further characterized by the semiconductor alloy being selected from the group consisting of a-Si:F:H and a-SiH$_x$.

6. The photoelectrode according to claim 1 further characterized by the first layer being an n+ type amorphous silicon alloy contact layer adapted to be coupled to the electrical lead, doped with a second dopant to a concentration of

about $10^{27}$ atoms/cm$^3$ and the second layer being a substantially intrinsic amorphous silicon alloy layer.

7. The photoelectrode according to claim 1 further characterized by the first layer being doped with phosphorus.

8. The photoelectrode according to claim 1 further characterized by the first layer being a p+ type amorphous silicon semiconductor alloy adapted to be coupled to the electrical lead and the second layer being a substantially intrinsic amorphous silicon semiconductor alloy, the semi- conductor body further including a third layer (52) of n+ type amorphous silicon semiconductor alloy.

9. The photoelectrode according to claim 8 further characterized by the first layer being doped with boron to a concentration of about $10^{23}$ atoms/cm$^3$ and the third layer being doped with phosphorus to a concentration of about $10^{27}$ atoms/cm$^3$.

10. The photoelectrode according to claim 1 further characterized by the substrate (36 and 54) being a material selected from a group consisting of glass and stainless steel.

11. A photoelectrochemical cell for the conversion of sunlight into electrical energy or energy stored in a fuel, said cell having an interior space therein, said space divided by a membrane positioned in said space to form an anode compartment and a cathode compartment within said cell, said cell including an electrolyte in said anode compartment and in said cathode compartment, an electrode positioned in said cathode compartment with at least a portion in contact with said electrolyte, an electrode positioned in said anode compartment with at least a portion in contact with said electrolyte, and means for impinging photons upon said photoelectrode wherein sunlight will be converted into energy usable as electricity or a fuel at least one of said electrodes being a photoelectrode, said photoelectrode including a substrate having a deposition surface, a reflective layer deposited on the deposition surface of the substrate, and an electrically conductive lead, said photoelectrode characterized by a thin film amorphous silicon semiconductor alloy body deposited on the reflective layer having at least a first and second layer, the first layer being adjacent the reflective layer and including a first dopant and adapted to be coupled to the electrically conductive lead.

12. A cell according to claim 11, further characterized by said cell further including an electrical power source electrically coupled to said electrodes (14 and 16) wherein photoassisted electrolysis will occur.

13. A cell according to claim 11, further characterized by said cell further including an electrical load (68) electrically coupled to said electrodes (14 and 16) wherein sunlight is converted into electrical energy.

14. A cell according to claim 11, further characterized by the second layer of said photoelectrode being substantially intrinsic.

15. A cell according to claim 11, further characterized by the first layer of said photoelectrode being a first p+ amorphous silicon contact alloy layer doped to a concentration of about $10^{23}$ atoms/cm$^3$.

16. A cell according to claim 11, further characterized by the dopant of said photoelectrode being boron.

17. A cell according to claim 11, further characterized by the semiconductor alloy of said photoelectrode being selected from the group consisting of a-Si:F:H and a-Si:H$_x$.

18. A cell according to claim 11, further characterized by the first layer of said photoelectrode being an n+ type amorphous silicon alloy contact layer adapted to be coupled to the electrical lead, doped with a second dopant to a concentration of about $10^{27}$ atoms/cm$^3$ and the second layer being a substantially intrinsic amorphous silicon alloy layer.

19. A cell according to claim 11, further characterized by the first layer of said photoelectrode being doped with phosphorus.

20. A cell according to claim 11, further characterized by the first layer of said photoelectrode being an intrinsic p+ type amorphous silicon semiconductor alloy adapted to be coupled to the electrical lead and the second layer being a substantially intrinsic amorphous silicon semiconductor alloy, the semiconductor body further including a third layer of n+ type amorphous silicon semiconductor alloy.

21. A cell according to claim 11, further characterized by the first layer of said photoelectrode being doped with boron to a concentration of about $10^{23}$ atoms per cubic centimeter and the third layer being doped with phosphorus to a concentration of about $10^{27}$ atoms/cm$^3$.

22. A cell according to claim 11, further characterized by the substrate of said photoelectrode being a material selected from a group consisting of glass and stainless steel.

FIG. 1

FIG. 2

FIG. 3

16"

| | |
|---|---|
| N + | 52 |
| I | 50 |
| P + | 48 |
| METAL | 46 |
| SUBSTRATE | 44 |

34"

14'

| | |
|---|---|
| OXIDE | 62 |
| I | 60 |
| N + | 58 |
| METAL | 56 |
| SUBSTRATE | 54 |

32'

FIG. 4